(19) **Europäisches Patentamt**
**European Patent Office**
**Office européen des brevets**

(11) **EP 1 948 924 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(21) Anmeldenummer: **06806975.6**

(22) Anmeldetag: **04.10.2006**

(51) Int Cl.:
*F02M 65/00* (2006.01)       *F02M 55/02* (2006.01)
*G01L 9/00* (2006.01)       *G01L 23/24* (2006.01)

(86) Internationale Anmeldenummer:
**PCT/EP2006/067040**

(87) Internationale Veröffentlichungsnummer:
**WO 2007/054407 (18.05.2007 Gazette 2007/20)**

(54) **KRAFTSTOFFEINSPRITZSYSTEM FÜR BRENNKRAFTMASCHINEN**

FUEL INJECTION SYSTEM FOR INTERNAL COMBUSTION ENGINES

SYSTEME D'INJECTION DE CARBURANT POUR MOTEURS A COMBUSTION INTERNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.11.2005 DE 102005053683**

(43) Veröffentlichungstag der Anmeldung:
**30.07.2008 Patentblatt 2008/31**

(73) Patentinhaber: **ROBERT BOSCH GMBH**
**70442 Stuttgart (DE)**

(72) Erfinder:
• **MUCHOW, Joerg**
**72764 Reutlingen (DE)**
• **KASCHNER, Axel**
**72070 Tuebingen (DE)**
• **JASENEK, Axel**
**70435 Stuttgart (DE)**

(56) Entgegenhaltungen:
**EP-A2- 1 052 392       WO-A-85/03127**
**DE-A1-102005 024 194   GB-A- 2 138 142**
**US-A- 4 179 939       US-A- 4 438 496**

**Beschreibung**

Die Erfindung betrifft ein Kraftstoffeinspritzsystem für Brennkraftmaschinen, wie es vorzugsweise für selbstzündende Brennkraftmaschinen verwendet wird.

Stand der Technik

Um zukünftige Emissionsnormen, beispielsweise Euro V, einhalten und den Kraftstoffverbrauch weiter vermindern zu können, ist es bei Hochdruckeinspritzsystemen, wie sie vorzugsweise für schnelllaufende, selbstzündende Brennkraftmaschinen verwendet werden, notwendig, die zur Verbrennung in die Brennräume eingespritzte Kraftstoffmenge möglichst genau zu kennen, um den Einspritzvorgang entsprechend steuern zu können. Zur Ermittlung dieser Kraftstoffmenge können Flusssensoren eingesetzt werden, wie sie beispielsweise aus der DE 101 30 379 A1 bekannt sind. Neben der Schwierigkeit einen entsprechenden Sensor herzustellen und unter Bedingungen zu betreiben, wie sie im Motorraum eines Kraftfahrzeugs herrschen, bleibt die Schwierigkeit, wie ein solcher Sensor in ein Kraftstoffeinspritzsystem integriert werden kann, ohne dessen Funktionalität zu stören. Auch sollte ein solcher Sensor möglichst wenig Bauraum beanspruchen, damit die sonstigen Komponenten des Kraftstoffeinspritzsystems und der Motor selbst möglichst nicht geändert werden müssen.

Bei dem bekannten Einspritzsystem wird die eingespritzte Kraftstoffmenge über die Ansteuerdauer des Magnet- oder Piezoventils gesteuert, welches im Injektor das Öffnen und Schließen der Einspritzöffnungen steuert. Durch Verschleißerscheinungen im Injektor kann es jedoch zu einer Drift kommen, so dass der Öffnungs- und Schließzeitpunkt des Ventils mit der Zeit immer stärker von den Ansteuerzeitpunkten des Magnet- oder Piezoventils abweicht. Die Verschiebung des Öffnungs- und Schließzeitpunkts des Injektors hat zur Folge, dass die tatsächlich eingespritzte Kraftstoffmenge in Folge der gleichbleibenden Einspritzdauer immer stärker vom Sollwert abweicht. Insbesondere bei kleinen Einspritzmengen, wie sie bei der Vor- oder Nacheinspritzung in den Brennraum eingebracht werden, kann der relative Fehler der eingespritzten Kraftstoffmenge gegenüber der Soll-Kraftstoffmenge sehr groß werden. Wird hingegen der tatsächliche Einspritzbeginn und das tatsächliche Einspritzende genau bestimmt, kann dieser Fehler vermieden oder verkleinert werden.

Aus der WO 85/03127 ist ein Diesel-Einspritzsystem bekannt, bei dem zur Messung der durch den Kraftstoffdruck bedingten Aufweitung des Einspritzsystems piezoelektrische Dehnungssensoren auf der Oberfläche der Bauteile angebracht werden. Dazu sind Vertiefungen vorgesehen, auf deren Grund die Dehnungssensoren beispielsweise durch Verkleben oder durch Vergießen mit Epoxidharz fixiert werden.

Vorteile der Erfindung

Das erfindungsgemäße Kraftstoffeinspritzsystem mit den kennzeichnenden Merkmalen des Patentanspruchs 1 weist demgegenüber den Vorteil auf, dass der tatsächliche Einspritzbeginn und das tatsächliche Einspritzende mit geringem Aufwand und ohne bauliche Änderungen des Kraftstoffeinspritzsystems gemessen werden können. Das erfindungsgemäße Kraftstoffeinspritzsystem weist hierzu eine Kraftstoffhochdruckquelle und wenigstens einen Injektor auf, in dem wiederum wenigstens eine Einspritzöffnung ausgebildet ist, durch die Kraftstoff in einen Brennraum der Brennkraftmaschine einspritzbar ist. Die Kraftstoffhochdruckquelle und die wenigstens eine Einspritzöffnung des Injektors sind über einen kraftstoffführenden Hochdruckkanal miteinander verbindbar. Öffnet die Ventilnadel, die üblicherweise im Injektor vorhanden ist und die die Einspritzöffnungen öffnet und schließt, so kommt es im Hochdruckkanal zu einem messbaren Druckabfall und bei Einspritzende wiederum zu einem Druckanstieg. Diese Druckänderung führt zu einer elastischen Formänderung des Körpers, in dem der Hochdruckkanal ausgebildet ist. An diesem Körper ist erfindungsgemäß ein Dehnungssensor angebracht, mit dem sich auch sehr kleine Formänderungen des Körpers erfassen lassen. Ist der Dehnungssensor mit einer entsprechenden Auswerteeinheit verbunden, so kann nach entsprechender Kalibrierung ohne weiteres der Einspritzbeginn und das Einspritzende genau gemessen und daraus die Einspritzmenge bestimmt werden.

Ist zwischen der Kraftstoffhochdruckquelle, die bei einem Common-Rail-System das Rail selbst ist, und dem Injektor eine Hochdruckleitung ausgebildet, in der der Hochdruckkanal verläuft, so ist es vorteilhaft, den Dehnungssensor an die Hochdruckleitung anzubringen, da hier durch das Verhältnis zwischen Innendurchmesser und Wandstärke die größte Formänderung zu erwarten ist. Hierbei ist es vorteilhaft, wenn der Dehnungssensor möglichst nahe am Injektor angebracht ist, um Überlagerungen mit Druckschwingungen, die von den übrigen Injektoren und von sonstigen Komponenten des Kraftstoffeinspritzsystems herrühren, möglichst gering zu halten. Es kann aber auch vorgesehen sein, dass der Dehnungssensor auf dem Injektor selbst und hier vorzugsweise auf der Düse angebracht ist, die Teil des Injektors ist. Dort treten zwar geringere Formänderungen auf, so dass auch die gemessenen Dehnungen entsprechend geringer sind, andererseits ergibt sich hier der Vorteil, dass nahe an den Einspritzöffnungen gemessen wird und damit die Fehler bei der Bestimmung von Einspritzanfang und -ende minimiert werden können.

Die Auswertung geschieht in einer geeigneten Auswerteeinrichtung, beispielsweise dem Steuergerät des Motors. Hier kann das Messsignal des Dehnungssensors mit entsprechenden Algorithmen aufbereitet werden, um die Einflüsse von anderen Injektoren und sonstige Druckschwingungen zu eliminieren, die im System auftreten und die das eigentliche Signal, dass das Öffnen und Schließen der Ventilnadel im jeweiligen Injektor repräsentiert, mit möglichst geringem Fehler dem Messgerät zur Verfügung zu stellen.

Zeichnung

In der Zeichnung ist ein Ausführungsbeispiel des erfindungsgemäßen Kraftstoffeinspritzsystems dargestellt. Es zeigt

Figur 1     das Kraftstoffeinspritzsystem mit seinen wesentlichen Komponenten in schematischer Darstellung, wobei der Übersichtlichkeit halber nur einer der Injektoren dargestellt ist,
Figur 2     zeigt einen Ausschnitt der Hochdruckleitung,
Figur 3     ebenfalls einen Ausschnitt der Hochdruckleitung mit aufgebrachten Dehn- messstreifen,
Figur 4     ein weiteres Ausführungsbeispiel für die Anbringung von Dehnungssensoren auf einer Hochdruckleitung,
Figur 5     einen Querschnitt durch die in Figur 4 dargestellte Hochdruckleitung entlang der Linie V-V und
Figur 6     in der gleichen Darstellung wie Figur 5 einen Querschnitt durch eine weitere Hochdruckleitung.

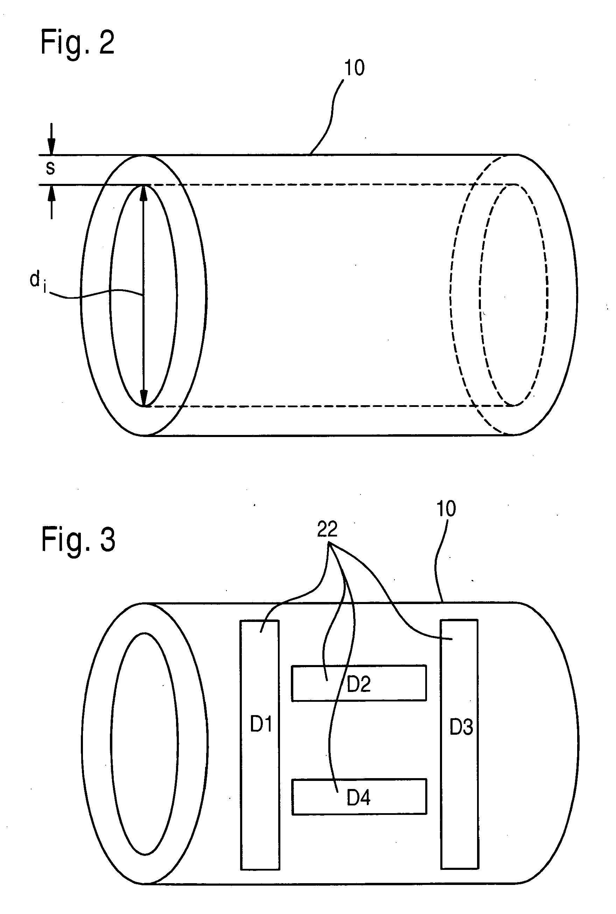

Bei den in den Figuren 3-6 gezeigten Ausgestaltungen handelt es sich um Beispiele von Dehnungssensoren, welche nicht Teil der Erfindung sind.

Beschreibung der Ausführungsbeispiele

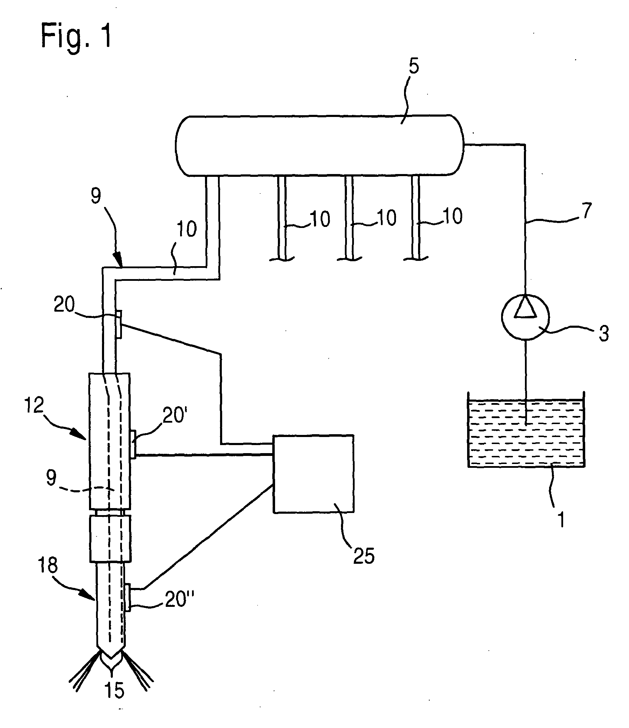

In **Figur 1** ist ein Kraftstoffeinspritzsystem zur direkten Einspritzung von Kraftstoff in die Brennräume von vorzugsweise selbstzündenden Brennkraftmaschinen dargestellt. Das Kraftstoffeinspritzsystem umfasst eine Hochdruckpumpe 3, die über eine Leitung 7 Kraftstoff unter hohem Druck einem Kraftstoffhochdruckspeicher 5 zuführt, der bei Common-Rail Einspritzsystemen als Rail bezeichnet wird. Durch eine entsprechende Regelung der Hochdruckpumpe 3 wird im Kraftstoffhochdruckspeicher 5 ein vorgegebener hoher Kraftstoffdruck aufrecht erhalten, der an den jeweiligen Betriebszustand der Brennkraftmaschine angepasst werden kann. An den Kraftstoffhochdruckspeicher 5 sind über jeweils eine Hochdruckleitung 10 mehrere Injektoren 12 angeschlossen, wobei in Figur 1 der Übersichtlichkeit halber nur ein Injektor 12 dargestellt ist. Im Injektor 12 sind mehrere Einspritzöffnungen 15 ausgebildet, über die der Kraftstoff letztendlich direkt in einen Brennraum der Brennkraftmaschine eingespritzt wird. Die Einspritzöffnungen 15 sind über einen Hochdruckkanal 9 mit dem Kraftstoffhochdruckspeicher 5 verbunden, der im Injektor als ein Kraftstoffkanal ausgebildet ist und sich danach in Form der Hochdruckleitung 10 bis in den Kraftstoffhochdruckspeicher 5 fortsetzt.
Um die Dehnungsänderung der Körper zu erfassen, in denen der Hochdruckkanal 9 verläuft, ist wenigstens ein Dehnungssensor 20, 20', 20" vorgesehen, wobei der Dehnungssensor 20, 20', 20" in Figur 1 in drei alternativen Positionen gezeigt ist. So kann der Dehnungssensor 20 an der Hochdruckleitung 10, am Injektor 12 selbst, hier mit Bezugsziffer 20' bezeichnet, oder es kann an der Düse 18, die Teil des Injektors 12 ist, ein Dehnungssensor 20" angebracht sein. Der Dehnungssensor 20, 20', 20" ist mit einer Auswerteeinheit 25 verbunden, wo aus dem Signal des Dehnungssensors 20, 20', 20" die Dehnung des Körpers bestimmt wird, an dem sich der Dehnungssensor 20, 20', 20" befindet. Über weitergehende Algorithmen kann schließlich die Druckänderung in dem entsprechenden Körper 10, 12 bestimmt werden.
Das Messprinzip beruht auf dem physikalischen Effekt, dass ein fluiddurchströmter Körper, z. B. eine rohrförmige Hochdruckleitung, durch die elastischen Eigenschaften des Materials eine Dehnung erfährt, wenn das durchgeleitete Fluid unter Druck gesetzt wird. Dadurch werden Umfangs- und Längenänderungen im Körper hervorgerufen, die mit einem geeigneten Dehnungssensor gemessen werden können. Über eine Kalibrierung ist dann eine Bestimmung des im Rohr herrschenden Drucks möglich, insbesondere eine zeitliche Änderung des Drucks. Betrachtet man den Fall, bei dem der Dehnungssensor 20 an der Hochdruckleitung 10 angeordnet ist, die im wesentlichen die Form eines Hohlzylinders aufweist, so kann die Umfangs- und Längsspannung berechnet werden, wenn die Materialkonstanten bekannt sind, und ebenso der Innendruck bzw. die Druckänderung. Die Umfangsspannung $\sigma_u$ bzw. die Längsspannung $\sigma_1$ ergibt sich dann gemäß Gleichung (1) und (2): $\mu$

$$\sigma_u = p \cdot d_i / 2s \qquad (1)$$

$$\sigma_l = p \cdot d_i / 4s \qquad\qquad (2)$$

wobei p der Innendruck ist. Die geometrischen Größen, also der Innendurchmesser $d_i$ und die Wanddicke s, sind in **Figur 2** dargestellt, wo ein Ausschnitt der Hochdruckleitung 10 gezeigt ist. Aus den Spannungen im Material der Hochdruckleitung 10 lässt sich dann die entsprechende Dehnung $\varepsilon$ berechnen, wobei der Elastizitätsmodul E und die Querkontraktionszahl $\mu$ materialabhängig sind. Es ergibt sich Gleichung (3) und (4):

$$\varepsilon_u = (\sigma_u - \mu \cdot \sigma_l) / E \qquad\qquad (3)$$

$$\varepsilon_l = (\sigma_l - \mu \cdot \sigma_u) / E \qquad\qquad (4)$$

Die Materialdehnung der Hochdruckleitung 10 oder des Injektors 12 kann beispielsweise über Dehnmessstreifen in ein elektrisches Signal umgewandelt werden. Beim Einspritzen des Kraftstoffs bricht durch das Öffnen der Düse der Druck im Injektor und in der Hochdruckleitung 10 ein. Die entsprechende Druckänderung kann über die dadurch verursachte Dehnungsänderung detektiert werden. Mit einem entsprechenden Auswertealgorithmus ergibt sich daraus der Einspritzbeginn und das Einspritzende.

Zur Bestimmung der eingespritzten Kraftstoffmenge durch die genaue Bestimmung des Einspritzbeginns bzw. des Einspritzendes können Dehnungssensoren 20' am Injektor selbst, an der Hochdruckleitung 10 oder an mehreren Stellen gleichzeitig angebracht werden. Das Anbringen des Dehnungssensors 20" direkt an der Düse wäre wünschenswert, da hier die Störeinflüsse, wie z. B. Durchschwingungen nach dem Schließen des Injektors 12 und durch die sonstigen Injektoren am geringsten sind. Allerdings ist das Verhältnis von Rohrinnendurchmesser $d_i$ und der Wandstärke s sehr viel ungünstiger als in der Hochdruckleitung 10, so dass das zu erwartende Signal des Dehnungssensors hier gering und damit die Auswertung entsprechend schwierig ist. Außerdem ist aus konstruktiven Gründen die Anbringung von Dehnungssensoren am Injektor selbst schwierig, da der Bauraum hier sehr begrenzt ist.

Im Folgenden soll die Größe des zu erwartenden Effekts abgeschätzt werden. Die Umfangs- und Längsspannungen an der Hochdruckleitung 10 betragen typischerweise $d_i$ = 3 mm und s = 1,5 mm. Bei einem Innendruck von 2000 bar ergibt sich so nach Gleichung (1) und (2) $\sigma_u$ = 2000 bar und $\sigma_l$ =1000 bar. Mit Gleichung (3) und (4) ergeben sich unter Berücksichtigung typischer Materialwerte für hochfesten Stahl, das ist Elastizitätsmodul E = 210 GPa und $\mu$=0,3, Dehnungen von $\varepsilon_u$ = 8,1 $\cdot$ $10^{-4}$ und $\varepsilon_l$ = 1,9 $\cdot$ $10^{-4}$. Nimmt man an, es werden vier Dehnungssensoren in Form einer Wheatstone-Messbrücke verschaltet, so ist das Verhältnis von Signalspannung $U_A$ zu Eingangsbrückenspannung $U_B$ nach Gleichung (5) gegeben:

$$U_A / U_B = k/4 \cdot (\varepsilon_1 - \varepsilon_2 + \varepsilon_3 - \varepsilon_4) = 1,2 \cdot 10^{-3} \qquad\qquad (5)$$

Dehnungssensoren Der k-Faktor ist für Metalle etwa 2 und kann bei Halbleitermaterialen erheblich höher liegen. Die Dehnungen $\varepsilon_1$, bis $\varepsilon_4$ sind die von den einzelnen Dehnungssensoren gemessenen Dehnungen. Ein Signal in dieser Größenordnung kann typischerweise mit anwendungsspezifischen, integrierten Schaltkreisen verstärkt und ausgewertet werden. Dazu muss ein entsprechender Algorithmus in der Auswerteeinheit 25 hinterlegt sein, um die entsprechenden Signale dem Steuergerät zur Verführung stellen zu können. Die Empfindlichkeit der Messung kann durch Änderung der Bohrgeometrie in der Hochdruckleitung 10, also des Verhältnisses von Wandstärke s zu Innendurchmesser $d_i$, gegenüber der obigen Abschätzung erheblich verbessert werden.

Die Auswertung des Dehnungssignals kann, muss aber nicht zwangsläufig mittels einer Wheatstone-Brücke erfolgen. **Figur 3** zeigt eine Anordnung von vier Dehnmeßstreifen 22, die in der Zeichnung mit D1, D2, D3 und D4 numeriert sind, wie sie erfindungsgemäß eingesetzt werden können. Es sind aber auch andere Konfigurationen denkbar. So können die Dehnungssensoren D2 und D4 um beliebige Winkel versetzt sein und auch die Anordnung entlang der Längsachse in der Hochdruckleitung 10 ist beliebig. Es ist auch denkbar, alle Dehnmessstreifen 22 in Umfangsrichtung oder alle in Längsrichtung der Hochdruckleitung 10 anzuordnen.

Da die Drift an jedem Injektor 12 verschieden ausfällt, ist es empfehlenswert, an jedem Injektor bzw. der dazugehörigen Hochdruckleitung 10 die Einspritzmenge bzw. Einspritzdauer separat zu bestimmen. Sollte dies nicht möglich sein, so kann der Effekt der kommunizierenden Röhren ausgenutzt werden. Ein Druckeinbruch an einem Injektor 12 kann auch in der Hochdruckleitung 10 eines anderen Injektors 12 beobachtet werden, wenn auch mit geringer Druckamplitude. Nach dem Schließen des Injektors kommt es zu Druckschwingungen, die sich vom betreffenden Injektor 12 bis in den Kraftstoffhochdruckspeicher 5 ausbreiten. Eine geeignete Signalaufbereitung ist deshalb notwendig, um den Einspritzbeginn und das Einspritzende exakt bestimmen zu können.

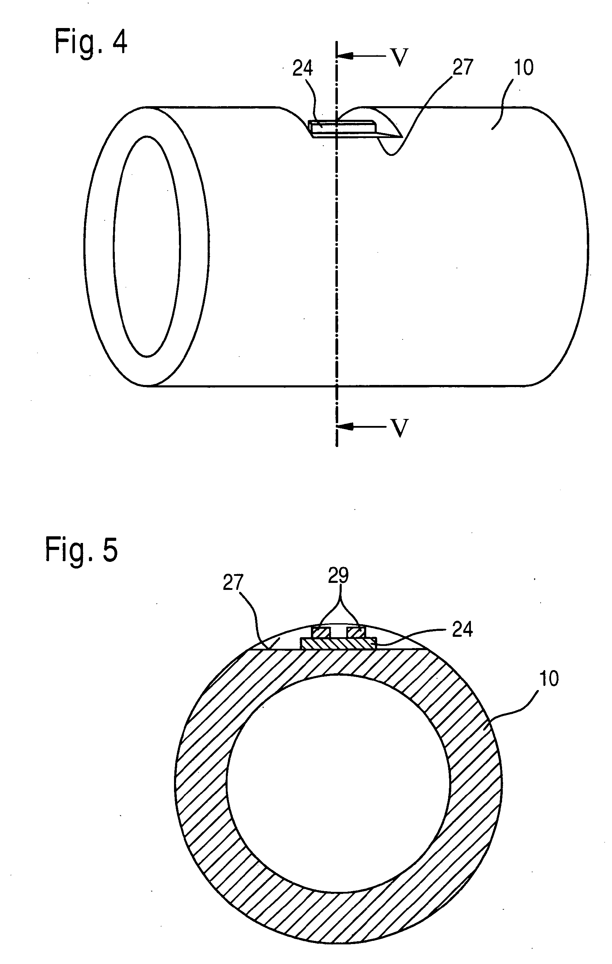

Für die Ausführung der Dehnungssensoren 20, 20', 20" sind verschiedene Ausführungsvarianten denkbar. So können, in einer Ausgestaltung, welche nicht Teil der Erfindung ist, beispielsweise Halbleiter-Chips 24 mit darauf befindlichen Widerständen auf dem Injektor 12 oder der Hochdruckleitung 10 aufgebracht werden wobei die Widerstände abhängig von der Dehnung des Silizium-Chips 24 ihren Widerstand ändern. In **Figur 4** ist hierzu eine Mögliche Anordnung eines Halbleiter-Chips 24 gezeigt, der hier auf einer Abflachung 27 aufgebracht ist, die an einer Hochdruckleitung 10 ausgebildet ist. **Figur 5** zeigt dazu einen Querschnitt durch die in Figur 4 dargestellte Hochdruckleitung 10 entlang der Linie V-V.

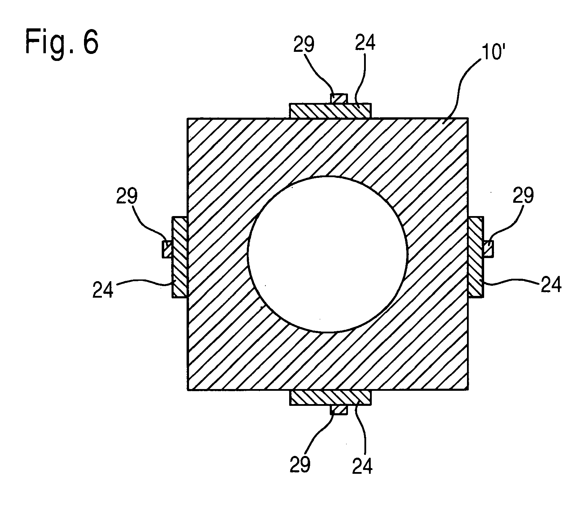

Alternativ können auch mehrere solche Halbleiter-Chips 24, die beispielsweise auf Basis von Silizium gefertigt sein können, auf die Hochdruckleitung 10 oder den Injektor 12 aufgebracht werden. **Figur 6** zeigt hierzu in einem Querschnitt eine Hochdruckleitung 10', die einen quadratischen Außenquerschnitt aufweist. Auf den Seitenflächen kann einer oder es können - wie in diesem Beispiel - mehrere Dehnungssensoren 20 aufgebracht werden.

Die Halbleiter-Chips 24 beinhalten einen oder mehrere piezoresistive Widerstände 29, die ähnlich den oben beschriebenen Dehnmessstreifen 22 mit der Auswerteeinheit 25 verbunden sind. Zum Schutz der Halbleiter-Chips 24 können diese verglast werden, was auf einer Abflachung 27 technisch deutlich einfacher zu bewältigen ist als auf einer gekrümmten Oberfläche.

Zur erfindungsgemässen Ausgestaltung der Dehnungssensoren 20, 20', 20" wird der Injektor 12 oder die Hochdruckleitung 10 mit einem piezoresistiven oder anderweitig dehnungsempfindlichen Material, beispielsweise NiCr (Si) gezielt beschichtet und gegebenenfalls nachfolgend strukturiert. Dazu müsste vorher eine elektrisch isolierende Schicht auf dem Stahl der Hochdruckleitung 10 angebracht werden, um Kurzschlüsse zu vermeiden. Auch andere Varianten der Dehnungsmessung sind denkbar.

Das oben beschriebene Kraftstoffeinspritzsystem mit der Bestimmung von Einspritzzeitpunkten mittels Dehnungsmessung kann vorzugsweise in Kraftstoffeinspritzsystemen für Dieselmotoren eingesetzt werden, aber auch in Motoren mit Benzin-Direkteinspritzung.

**Patentansprüche**

1. Kraftstoffeinspritzsystem für Brennkraftmaschinen mit einer Kraftstoffhochdruckquelle (5) und wenigstens einem Injektor (12), der wenigstens eine Einspritzöffnung (15) aufweist, durch die Kraftstoff in einen Brennraum einer Brennkraftmaschinen einspritzbar ist, wobei die Kraftstoffhochdruckquelle (5) und die wenigstens eine Einspritzöffnung (15) über einen kraftstoffführenden Hochdruckkanal (9) miteinander verbindbar sind, und mit einem an einem Körper (10; 12), in dem der Hochdruckkanal (9) ausgebildet ist, angeordneten Dehnungssensor (20; 20'; 20"), mit dem sich die durch den Druck im Hochdruckkanal (9) bewirkte elastische Formänderung des Körpers (10; 12) bestimmen lässt, **dadurch gekennzeichnet, dass** der Dehnungs- sensor (20; 20'; 20") aus einem piezoresistiven oder anderweitig dehnungsempfindlichen Material besteht, mit welchem der Körper (10; 12) beschichtet ist.

2. Kraftstoffeinspritzsystem nach Anspruch 1, **dadurch gekennzeichnet, dass** der Dehnungssensor (20; 20'; 20") an eine Auswerteeinheit (25) angeschlossen ist, mit der sich aus dem Signal des Dehnungssensors (20; 20'; 20") die Druckänderung im Hochdruckkanal (9) bestimmen lässt.

3. Kraftstoffeinspritzsystem nach Anspruch 1 oder 2, **dadurch gekennzeichnet, dass** der Hochdruckkanal (9) zumindest zum Teil in einer hohlzylindrischen Hochdruckleitung (10) verläuft.

4. Kraftstoffeinspritzsystem nach Anspruch 1, **dadurch gekennzeichnet, dass** der Dehnungssensor (20'; 20") an der Außenseite des Injektors (12) angebracht ist.

5. Kraftstoffeinspritzsystem nach Anspruch 8, **dadurch gekennzeichnet, dass** der Injektor eine Düse (18) umfasst, in der eine bewegliche Düsennadel die wenigstens eine Einspritzöffnung (15) öffnet und schließt, wobei der Dehnungssensor (20") an der Düse (18) angebracht ist.

**Claims**

1. Fuel injection system for internal combustion engines, having a fuel high pressure source (5) and having at least one injector (12) which has at least one injection opening (15) through which fuel can be injected into a combustion chamber of an internal combustion engine, with it being possible for the fuel high-pressure source (5) and the at least one injection opening (15) to be connected to one another via a fuel-conducting high-pressure duct (9), and having a strain sensor (20, 20', 20") which is arranged on a body (10; 12) in which the high-pressure duct (9) is formed, by means of which strain sensor (20, 20', 20") it is possible to determine the elastic deformation of the body (10; 12) caused by the pressure in the high-pressure duct (9), **characterized in that** the strain sensor (20, 20', 20") is composed of a piezoresistive or otherwise strain-sensitive material with which the body (10; 12) is coated.

2. Fuel injection system according to Claim 1, **characterized in that** the strain sensor (20, 20', 20") is connected to an evaluating unit (25) by means of which the pressure change in the high-pressure duct (9) can be determined from the signal of the strain sensor (20, 20', 20").

3. Fuel injection system according to Claim 1 or 2, **characterized in that** the high-pressure duct (9) runs at least partially in a hollow cylindrical high-pressure line (10).

4. Fuel injection system according to Claim 1, **characterized in that** the strain sensor (20', 20") is attached to the outer side of the injector (12).

5. Fuel injection system according to Claim 4, **characterized in that** the injector comprises a nozzle (18) in which a movable nozzle needle opens and closes the at least one injection opening (15), with the strain sensor (20") being attached to the nozzle (18).

**Revendications**

1. Système d'injection de carburant pour moteurs à combustion interne, comprenant une source de carburant haute pression (5) et au moins un injecteur (12), qui présente au moins une ouverture d'injection (15), à travers laquelle du carburant peut être injecté dans une chambre de combustion d'un moteur à combustion interne, la source de carburant haute pression (5) et l'au moins une ouverture d'injection (15) pouvant être connectées l'une à l'autre par le biais d'un canal haute pression (9) guidant le carburant, et comprenant un capteur d'extension (20 ; 20' ; 20") disposé sur un corps (10 ; 12) dans lequel est réalisé le canal haute pression (9), qui permet de déterminer la variation de forme élastique du corps (10 ; 12) provoquée par la pression dans le canal haute pression (9), **caractérisé en ce que** le capteur d'extension (20 ; 20' ; 20") se compose d'un matériau piézorésistif ou autrement sensible à l'extension, avec lequel le corps (10 ; 12) est revêtu.

2. Système d'injection de carburant selon la revendication 1, **caractérisé en ce que** le capteur d'extension (20 ; 20' ; 20") est raccordé à une unité d'analyse (25) avec laquelle on peut déterminer à partir du signal du capteur d'extension (20 ; 20' ; 20") la variation de pression dans le canal haute pression (9).

3. Système d'injection de carburant selon la revendication 1 ou 2, **caractérisé en ce que** le canal haute pression (9) s'étend au moins en partie dans une conduite haute pression cylindrique creuse (10).

4. Système d'injection de carburant selon la revendication 1, **caractérisé en ce que** le capteur d'extension (20' ; 20") est monté sur le côté extérieur de l'injecteur (12).

5. Système d'injection de carburant selon la revendication 4, **caractérisé en ce que** l'injecteur comprend une buse (18) dans laquelle une aiguille de buse mobile ouvre et ferme l'au moins une ouverture d'injection (15), le capteur d'extension (20") étant monté sur la buse (18).

## Fig. 1

## Fig. 2

## Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10130379 A1
- WO 8503127 A